# EUROPEAN PATENT SPECIFICATION

(11) **EP 2 540 049 B1**
(45) Date of publication and mention of the grant of the patent: **08.08.2018**
(21) Application number: 11748110.1
(22) Date of filing: 25.02.2011
(51) Int. Cl.: H04L 12/26, H04L 29/06, H04L 29/04, H04L 12/22, G06F 11/30

(54) **SEQUENTIAL HEARTBEAT PACKETS ARRANGEMENT**
ANORDNUNG FÜR SEQUENTIELLE HEARTBEAT-PAKETE
SYSTÈME À PAQUETS DE BATTEMENT DE COEUR SÉQUENTIELS

(30) Priority: 26.02.2010 US 308868 P; 26.02.2010 US 308867 P
(43) Date of publication of application: 02.01.2013
(73) Proprietor: Keysight Technologies Singapore (Holdings) Pte. Ltd., Singapore 768923 (SG)
(72) Inventor: MATITYAHU, Eldad, Santa Clara, CA 95054 (US); SHAW, Robert, Santa Clara, CA 95054 (US); CARPIO, Dennis, Santa Clara, CA 95054 (US); HUI, Siuman, Santa Clara, CA 95054 (US); LIAN, Wei, Santa Clara, CA 95054 (US)
(74) Representative: Murgitroyd & Company
(86) International application number: PCT/US2011/026160
(87) International publication number: WO 2011/106590

(56) References cited:
- US-A1- 2004 190 547
- US-A1- 2006 002 292
- US-A1- 2006 031 475
- US-A1- 2007 002 755
- US-A1- 2007 253 329
- US-B1- 6 389 550
- US-B2- 7 275 100

## Description

### BACKGROUND OF THE INVENTION

In today society, a company may depend upon its network to be fully functionally in order to conduct business. To ensure the vitality of the company, the network may have to be protected from external attacks (such as virus attacks, malware attacks, etc.). Accordingly, the network may be monitored to ensure reliable operation, fault detection, timely mitigation of potentially malicious activities and the like. One method for monitoring the network includes the installation of an inline network tap and one or more monitoring systems (such as an intrusion prevention system, an intrusion detection system, a firewall, a packet sniffer, and the like).

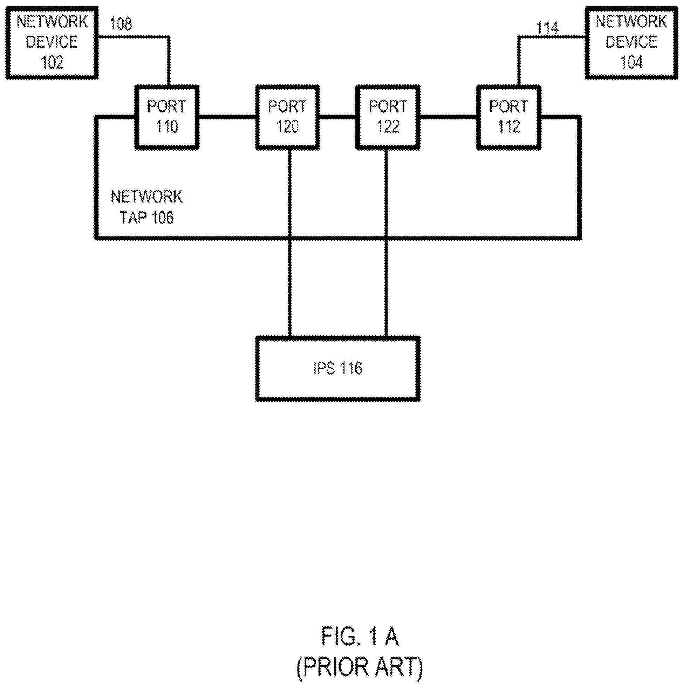

To facilitate discussion, Fig. 1A shows a simple diagram of a network environment with a monitoring system, such as an intrusion prevention system (IPS). Consider the situation wherein, for example, a network tap 106 may be employed to gather information about data traffic flowing between two network devices (such as network device 102 and network device 104). In other words, data traffic may flow from network device 102 along a path 108 through network tap 106 (into a port 110 and out of a port 112) along a path 1.1.4 to network device 104. In a full-duplex network, network tap 106 may also be configured to monitor data traffic flowing from network device 104 to network device 102 (from port 112 to port 110).

To protect itself, a company may install a monitoring system, such as an intrusion prevention system (IPS) 116. In the aforementioned example, data traffic may flow through IPS 116 before being forwarded onward. In an example, data traffic coming from network device 102 may flow into port 110 then out of a part 120 to IPS 116. Data traffic may then flow from IPS 116 back to network tap 106 via a port 122 before being sent onward along path 114 to network device 104. Similarly, data traffic coming from port 104 may also be flowing though IPS 116 (path includes port 112-port 122-IPS 116-port 120-port 110).

However, malfunction may also occur resulting in the network being unprotected. To ensure that IPS 116 is able to receive and transmit the data traffic, a diagnostic test may be performed to determine the condition of IPS 116. The diagnostic test includes inserting a unique data packet, known as a heartbeat packet, into the network data traffic flowing to IPS 116. IPS 116 is considered to be working properly if the heartbeat packet is received by IPS 116 and sent back to network tap 106 within a predefined period.

Consider the situation wherein, for example, a diagnostic test is being performed to determine the condition of IPS 116. In a typical diagnostic test, the user may define two parameters. The first parameter may be the time interval (e.g., every one second) for sending a heartbeat packet. The second parameter may be the set of fail conditions, in an example, the diagnostic test may be considered to have failed if network tap 106 fails to receive back from IPS 116 three consecutive heartbeat packets. Both of these parameters may be user-configurable and may vary depending upon the network condition and/or network hardware.

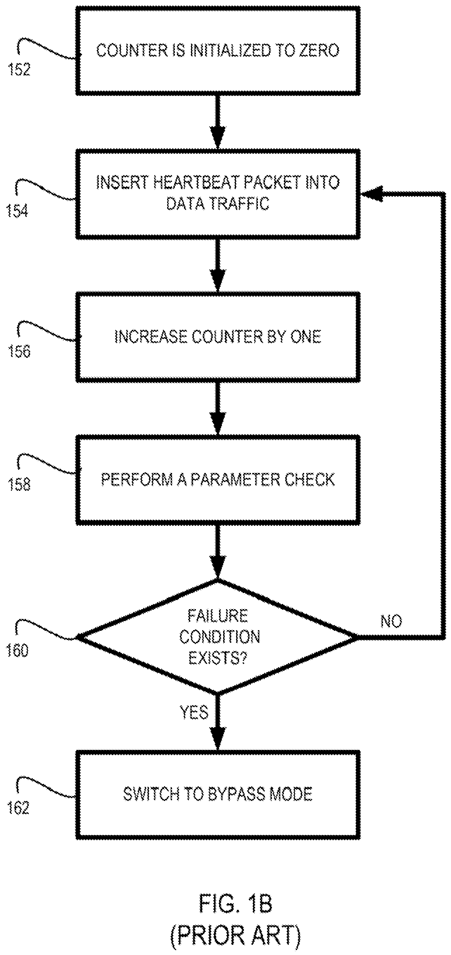

To facilitate the discussion. Fig, 1A wilt he discussed in relation to Fig. 1B, which shows a simple flow chart illustrating a method for performing a diagnostic test.

Before executing the diagnostic test, a counter may be initialised to zero (step 152).

At a next step 154, a heartbeat packet may be inserted into the data traffic and sent from, a network tap 106 to an IPS 116 via a port 120.

At a next step 156, the counter may be increased by one. The counter may be increased by one each time a heartbeat packet is sent and the counter may be reset to zero each time the heartbeat, packet is received back from IPS 116. In other words, if the heartbeat packet is sent back to network tap 106 via a port 122, the counter may be reset to zero.

At a next step 158, the system of network tap 106 performs a parameter check, A parameter check may include checking to see if the predefined time interval has passed. If the time interval has passed, another heartbeat packet may be sent. Another parameter check may include determining if the one of the fail conditions has been met. In this example, one of the fail conditions is three consecutive heartbeat packets not being received back by network ta 106.

At a next step 160, the system makes a determination if a fail condition exists, if a fail condition does not exist, the system returns to step 154 to continue the diagnostic test. However, if a fail condition exists, network tap 106 is switched from a normal mode to a bypass mode and the data traffic is rerouted (step 12). In other words, data traffic is no longer routed through IPS 1 16.

Although the single heartbeat diagnostic test may provide a method for identify a condition in which the data traffic may not be properly protected, other conditions may exist that may not be identified through the single heartbeat diagnostic test. Thus, companies continue to seek additional measures to ensure reliable operation, fault detection, and/or timely mitigation of potentially malicious activities.
US 2007/002755 A1 relates to a communications network tap with heartbeat monitor. US 2004/190547 A1 relates to a system and method for a network tap having integrated circuitry therein for obtaining statistics about a communication line. US 2006/031475 A1 relates to a method for synchronizing database files of a central node with database files of a local node in which the central node is coupled to the local node via a communication link.

### BRIEF DESCRIPTION OF THE SEVERAL VIEWS OF THE DRAWINGS

The present invention is illustrated by way of example, and not by way of limitation, in the figures of the accompanying drawings and in which like reference numerals refer to similar elements and in which:
Fig, 1A shows a simple diagram of a network environment with an intrusion prevention system.
Fig. 1B shows a simple flow chart illustrating a method for performing a diagnostic test.
Fig. 2 shows, in an embodiment of the invention a simple block diagram of a secured network environment.
Fig. 3A shows, in an embodiment of the invention, a simple logic block diagram of a sequential heartbeat diagnostic test.
Fig. 3B shows, in an embodiment of the invention, examples of diagnostic test conditions.
Fig. 3C shows, in an embodiment of the invention, examples of different flow path at different time periods.
Fig. 4 shows, in an embodiment of the invention, examples of different failure conditions that may be established to determine when an IPS is not functioning properly.
Fig. 5 shows, in an embodiment of the invention, a simple flow chart, illustrating a method for implementing a sequential heartbeat diagnostic test.

### DETAILED DESCRIPTION OF EMBODIMENTS

The invention is directed to an arrangement in a network tap for monitoring the state of a monitoring system as defined in claim 1. The present invention will now be described in detail with reference to a few embodiments thereof as illustrated in the accompanying drawings, in the following description, numerous specific details are set forth in order to provide a thorough understanding of the present invention. It will be apparent, however, to one skilled in the art, that the present invention may be practiced without some or all of these specific details, in other instances, well known process steps and/or structures have not been described in detail in order to not unnecessarily obscure the present invention.

Various embodiments are described herein below, including methods and techniques. It should be kept in mind that the invention might also cover articles of manufacture that includes a computer readable medium on which computer-readable instructions for carrying out embodiments of the inventive technique are stored. The computer readable medium may include, for example, semiconductor, magnetic, opto-magnetic, optical, or other forms of computer readable medium for storing computer readable code. Further, the invention may also cover apparatuses for practicing embodiments of the invention. Such apparatus may include circuits, dedicated and/or programmable, to carry out tasks pertaining to embodiments of the invention. Examples of such apparatus include a general-purpose computer and/or a dedicated computing device when appropriately programmed and may include a combination of a computer/computing device and dedicated/programmable circuits adapted for the various tasks pertaining to embodiments of the invention.

The invention is described with reference to specific architectures and protocols. Those skilled in the art will recognize that the description is for illustration and to provide examples of different mode of practicing the invention. The description is not meant to be limiting. For example, reference is made to network traffic and packets, while other forms of data and addresses can be used in the invention. Likewise, reference is made to mnitoting/security systems, but the invention may be applied toward other components that may benefit from fault detection. The invention is applicable to both wire and optical technologies. In addition, even though the invention may be described using an inline tap example, the invention is not limited to an inline device and may include programmable logic for performing inline and/or span functions.

In accordance with embodiments of the present invention, a sequential heartbeat arrangement is provided for implementing fault detection. Embodiments of the invention include arrangements for simulating a communication session between a network tap and a monitoring system (such as an intrusion prevention system, an intrusion detection system, a firewall, a packet sniffer, and the like). Embodiments of the invention also include arrangements for testing operation condition of the monitoring system.

In an embodiment of the invention, arrangements are provided for determining the condition of a monitoring system (such as an intrusion prevention system, an intrusion detection system, a firewall, a packet sniffer, and the like). In the prior art, a diagnostic test includes the transmission of a single heartbeat packet that is configured to test the condition of the path between the network tap and the monitoring system. In an embodiment of the invention, a sequential heartbeat diagnostic test is provided for identifying conditions that may cause a component, such as the monitoring system, to be faulty.

Unlike the prior art, a sequential heartbeat diagnostic test is configured to send one or more sets of sequential heartbeat packets to determine the state of a monitoring system. Each set of sequential heartbeat packets may be configured to test different conditions/operation/state of a monitoring system. In an example, a sequential heartbeat diagnostic test may include three set of sequential heartbeat packets with the first set of sequential heartbeat packets being configured to test the TCP (transmission control protocol) session, the second set of sequential heartbeat packets being configured to test the first security policy of a monitoring system, and the third set of sequential heartbeat packets being configured to test the second security policy of the monitoring system. As can be appreciated from the foregoing, the number of heartbeat packets and the number of set of sequential heartbeat packets being sent in a sequential heartbeat diagnostic test may vary depending upon the conditions being tested.

In an embodiment of the invention, a counter may be associated with each diagnostic test condition. Each counter may be independent of one another and may be defined by different. counter rules. In an example, one counter rule may require a counter to be increased and decreased by one increment each time a heartbeat packet is sent and received, respectively. In another example, another counter rule may require a counter to be increased by one and reset to zero each time a heartbeat packet is sent and received, respectively.

With a sequential heartbeat diagnostic test, an algorithm may be provided to simulate real world conditions in order to determine the true state of a monitoring system. Given the flexibility of the sequential heartbeat diagnostic test, a company can configure the diagnostic test to specifically test the conditions that have the most impact on its network.

The features and advantages of the present invention may be better understood with reference to the figures and discussions that follow.

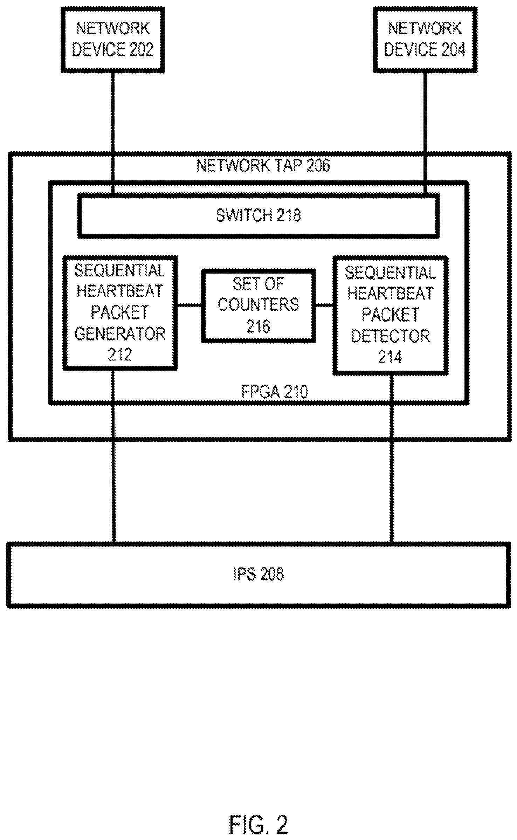

Fig. 2 shows, in an embodiment of the invention a simple block diagram of a secured network environment. The network may include a plurality of network devices (including network devices 202 and 204). These network devices may include, but are not limited to switches, routers, server computers, client computers, and so forth. A network tap 206 may be disposed in-line between the two network devices and may be configured to communicate bi-directionally with each of the network devices. Network tap 206 may also be coupled to a monitoring system, such as an IPS 208.

To ensure the network integrity, a sequential heartbeat diagnostic test may be executed. In an embodiment, network tap 206 may include a logic component, such as a field-programmable gate array (FPGA) 210, which may execute a sequential heartbeat diagnostic test. In an embodiment, FPGA 210 may include a sequential heartbeat packet generator 212 for generating and inserting a set of heartbeat packets into the network data traffic flowing to the monitoring system (IPS 208). FPGA 210, in an embodiment, may also include a sequential heartbeat packet detector 214, which may be configured to identify and remove the set of heartbeat packets from the data traffic when the set of heartbeat packets returns from the monitoring system (IPS 208).

In an embodiment, FPGA 210 may also include a set of counters 216. Each counter may be associated with a diagnostic test condition. As discussed herein, a diagnostic test condition refers to a test condition associated with the monitoring system that may be tested through a heartbeat packet.

In an embodiment, FPGA 210 may also include a switch 218. Switch 218 may be employed to switch network tap 206 from a normal mode (a mode in which the data traffic is being protected by a monitoring system) to a bypass mode (a mode in which the data traffic is being routed through a path that is not secured).

In an embodiment the FPGA 210 may be user configurable, thereby enabling the parameters associated with a sequential heartbeat diagnostic test to be tailored. In an example, the user may define the time interval for generating and sending a set of heartbeat packets. In another example, the user may define the fault conditions.

In an embodiment, FPGA 210 may be managed from a number of device structures via several managing device interfaces. For example, the sequential heartbeat diagnostic test may be configured over a command line interface, a web based device, system interface (such as an SNMP interface) and the like. Each of these interfaces may provide local as well as remote control of the network tap. Communication protocols for these interfaces are generally well-known in the art and may be utilized without limitation and without departing from the present invention.

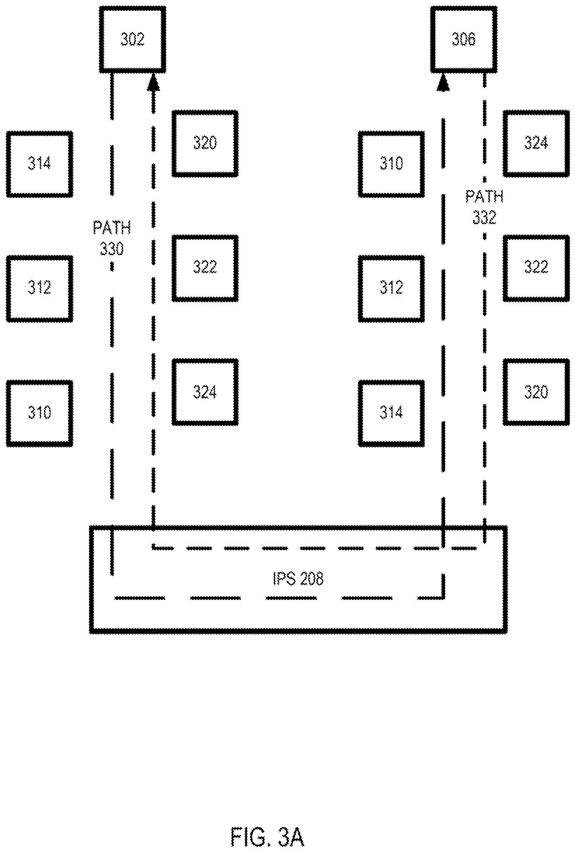

Fig. 3A shows, in an embodiment of the invention, a simple logic block diagram of a sequential heartbeat diagnostic test Consider the situation wherein, for example, data traffic flowing between two network devices (202 and 204, for example) may be directed through a secured network environment In an example, data traffic may be flowing out of port 302 through an inline monitoring system (such as IPS 208) back through port 306 before being transmitted onward.

To determine the condition of the inline monitoring system, a sequential heartbeat diagnostic test may be executed. Unlike the prior art, the sequential heartbeat diagnostic test is not designed merely to test the data path between network tap 206 and IPS 208. Instead, the sequential heartbeat diagnostic test is configured to simulate different real world conditions that data traffic may experience flowing through a secured network environment

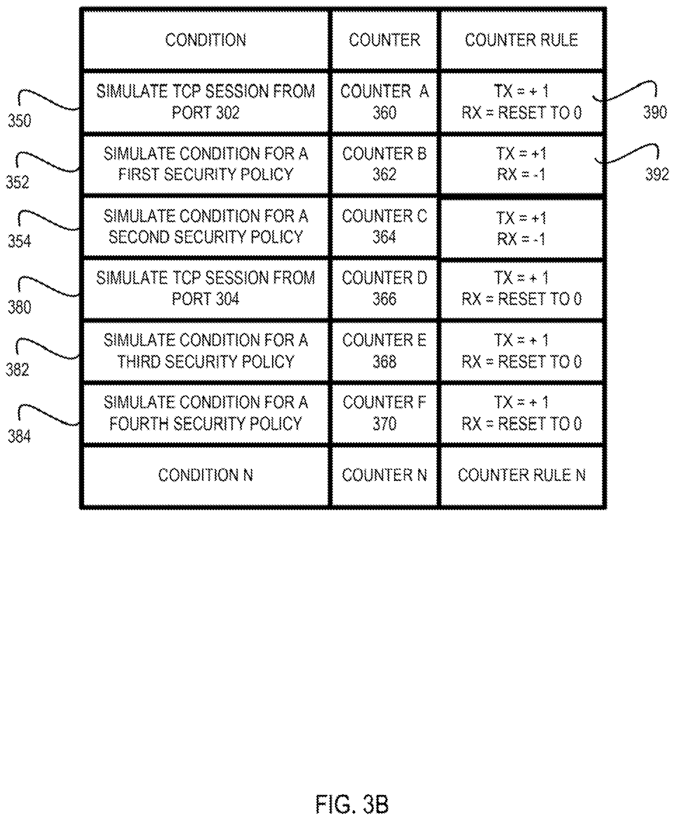

Consider the situation wherein, for example, a sequential diagnostic test is configured to test three real-world conditions (as shown in Fig. 3B): simulate TCP session between the network tap and IPS 208 (condition 350), simulate condition for a first security policy (condition 352), and simulate condition for a second security policy (condition 354). To perform the test, sequential heartbeat packet generator 212 may generate sets of sequential heartbeat packets (HB 310, HB 312, and HB 314) and may insert the sets of sequential heartbeat packets into the network data traffic flowing to IPS 208. As mentioned above, the number of heartbeat packets and the number of set of sequential heartbeat packets being sent in a sequential heartbeat diagnostic test may vary depending upon the conditions being tested. For example, each set of sequential heartbeat packets may be configured to test different conditions/operation/state of the monitoring system. In an example, HB 310 may be configured to simulate a TCP session, HB 312 may be configured to simulate a first security policy while HB 314 may be configured to simulate a second security policy.

In an embodiment, more than one sequential heartbeat diagnostic test may be performed. In an example, the diagnostic test conditions for data traffic flowing from port 302 to port 306 (path 330) may differ from the diagnostic test conditions for data traffic flowing in the reverse direction (path 332). For example, data traffic flowing from port 302 to port 306 may relate to data being uploaded to the company's intranet while data traffic flowing from port 306 to port 302 may relate to data being downloaded from the company's intranet. As a result, the diagnostic test condition for path 330 may focus on preventing malware attack while diagnostic test condition for path 332 may focus on preventing information leak. Accordingly, the sequential heartbeat diagnostic test may be configured to best fit the monitoring system being tested.

In an embodiment, the time interval between transmitting a set of sequential heartbeat packets may vary depending upon each diagnostic test condition. In an example, each diagnostic test condition for path 330 may require a set of sequential heartbeat packets to be sent every one second. In another example, each diagnostic test condition for path 332 may require a set of sequential heartbeat packets to be sent at different intervals. For example, condition 380 (simulating a TCP session) may require a set of sequential heartbeat packets to be sent every one second while the condition 382 and condition 384 (simulating the third security policy and fourth security policy, respectively) may require a set of sequential heartbeat packets to be sent every two seconds.

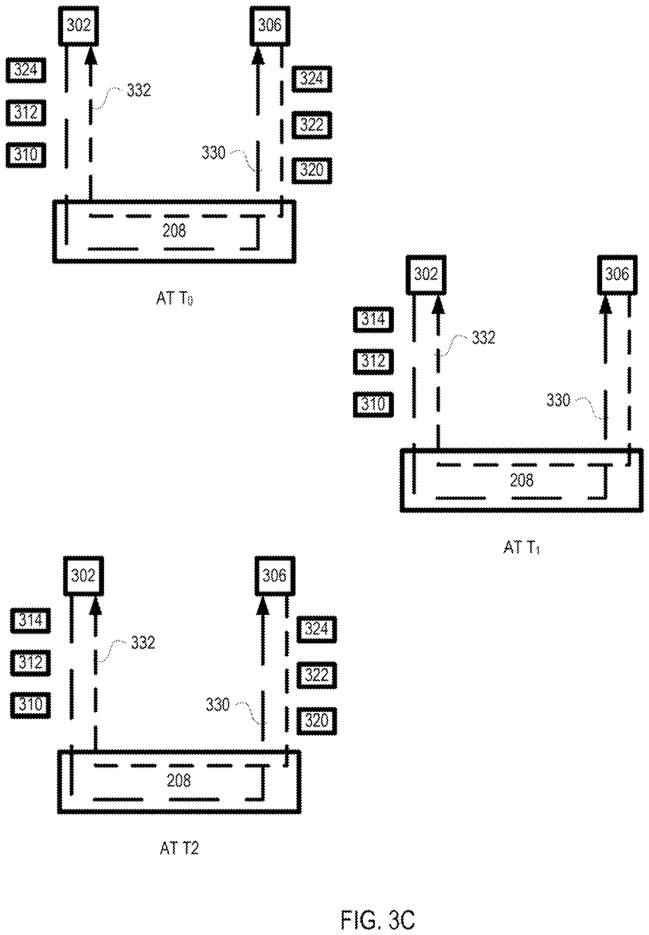

To illustrate, Fig. 3C shows two different flow paths at different time intervals. At t₀, three set of sequential heartbeat packets (HB 310, HB 312, and HB 314) are sent along path 330 and three set of sequential heartbeat packets (HB 320, HB 322, and HB 324) are sent along path 332. One second later, at t₁, no heartbeat packets are being sent along path 332 while three set of sequential heartbeat packets continue to be sent along path 330. However, at t₂, both paths (330 and 332) are transmitting three set of sequential heartbeat packets each. Accordingly, the number of set of sequential heartbeat packets being transmitted may vary depending upon the time parameter that may have been defined by a user.

In an embodiment of the invention, a counter may be associated with each diagnostic test condition. In an example, counter 360 is associated with condition 350, counter 362 is associated with condition 352, and counter 364 is associated with condition 354. In an embodiment, each counter may be defined by different rules. In an example, counter 362 may be configured to increase by one when sequential heartbeat packet generator 212 generates a set of sequential heartbeat packets and inserts the set of sequential heartbeat packets into the network data traffic being sent to IPS 208. Also counter 362 is configured to be decreased by one when sequential heartbeat packet detector 214 detects the incoming set of sequential heartbeat packets (counter rule 392). In another example, counter 360 may be configured to increase by one when a set of sequential heartbeat packets is sent and may be reset to zero when the set of sequential heartbeat packets is received back by the network tap (counter rule 390).

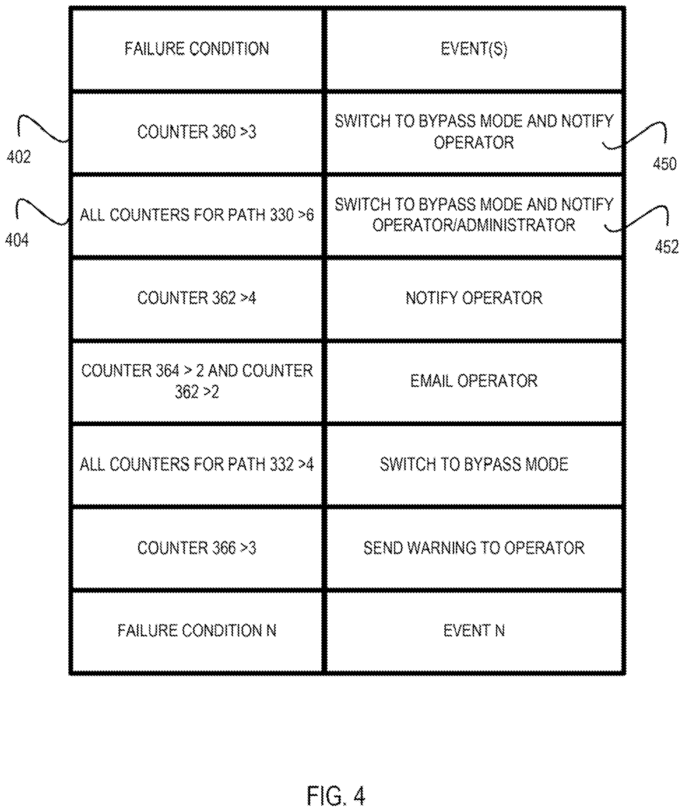

As can be appreciated from the foregoing, the sequential heartbeat diagnostic test can become a complex test that may be employed to test different real-world conditions that may be faced by a company. Fig. 4 shows, in an embodiment of the invention, examples of different failure conditions that may be established to determine when a monitoring system (such as IPS 208) is not functioning properly. In an example, a failure condition may exist if the number of set of sequential heartbeat packets sent that are associated with one counter is greater than a predefined threshold (failure condition 402). For example, three set of consecutive sequential heartbeat packets have been sent for condition 350; however, no set of sequential heartbeat packets has been transmitted back to sequential heartbeat packet detector. In another example, a failure condition may exist if the total number of sets of sequential heartbeat packets for all counters is above a predefined threshold (failure condition 404). For example, if the number of set of sequential heartbeat packets is greater then six than a failure condition exists.

In an embodiment, an event is triggered when a failure condition exists. The event that is associated with a failure condition may vary. In an example, if failure condition 402 exists, the network tap may be switched from a normal mode to a bypass mode and a warning may be sent to the operator (event 450). In another example, if failure condition 404 exists, the network tap may be switched to a bypass mode and notification may be sent to the operator and the administrator (event 452). Accordingly, the type of event that is triggered, as can be appreciated from the foregoing, may depend upon the severity of the failure condition.

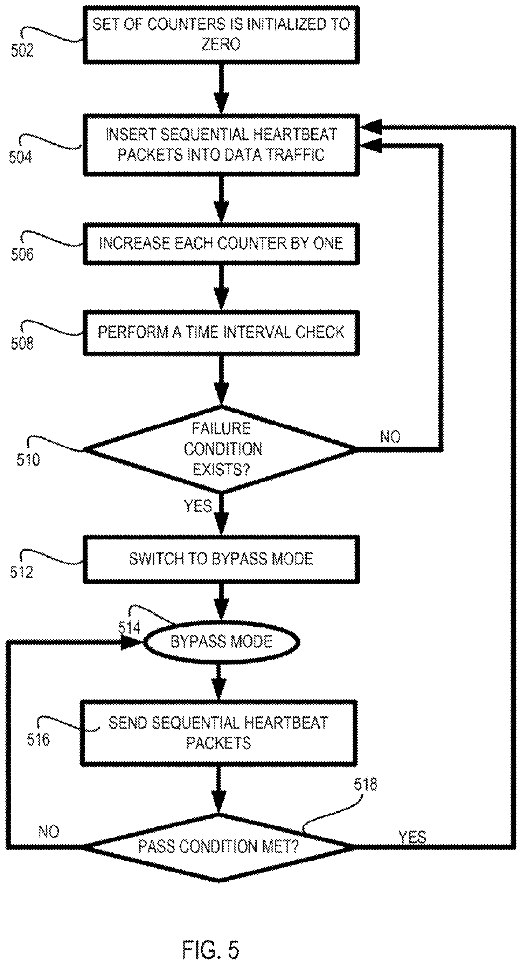

Fig. 5 shows, in an embodiment of the invention, a How chart illustrating a method for implementing a sequential heartbeat diagnostic test.

At a first step 502, a set of counters may be initialized to zero. As aforementioned, the number of counters may depend upon the number of diagnostic test conditions. In this example, assume that conditions 350. 352, and 354 are being tested for path 330 and conditions 380, 382, and 384 are being tested for path 332.

At a next step 504, a plurality of a set of sequential heartbeat packet may be inserted into the data traffic and may be sent to IPS 208. In an embodiment, the sequential heartbeat diagnostic test is a dual test. In other words, a diagnostic test may be performed along path 330 and path 332. In this example, at t₀, a set of sequential heartbeat packets is sent for each diagnostic test condition. For example, HB 310, HB 312, and HB 314 are being transmitted along path 330 while HB 320, HB 322, and HB 324 are being transmitted along path 332.

At a next step 506, the counter associate with each diagnostic test condition may be incremented by one. In an example, each of the counter (counters 360, 362, 364, 366, 368, and 370) may be set to one.

At a next step 508, the system may perform a time interval check. If a predefined time interval has passed, another set of sequential heartbeat packets may be sent. In an example, one second has passed. As a result, another set of sequential heartbeat packets is sent for conditions 350-354 but no set of sequential heartbeat packets may be sent for conditions 380, 382 and 384.

At a next step 510, the system makes a determination if a failure condition exists. As can be seen from Fig. 4, the number of failure conditions may vary depending upon a user's configuration. In an example, a financial firm may have more stringent failure conditions than a community network since more sensitive data may be flowing through the financial network.

If a fail condition does not exist, the system returns to step 504 to continue the sequential heartbeat diagnostic test. However, if a fail condition exists, the system may trigger one or mare events, at a next step 512. In an example, the network tap may switch from a normal mode to a bypass mode. In another example, notification may be sent to the operator/administrator. The event(s) that may be triggered may depend upon the severity of the failure condition and may be defined by the user.

Steps 508 and 510 are not sequential. In other words, step 508 does not have to occur before step 510 can be executed.

Even if the network tap is in a bypass mode (state 514), set of sequential heartbeat packets may continue to be sent (step 516) by the network tap, in an embodiment. Once the monitoring system (such as IPS 208) is connected back to the network tap, the network tap is switched back to a normal state when the failure condition is no longer valid.

In this document, various implementations may be discussed using an intrusion prevention system, as an example. This invention, however, is not limited to an intrusion prevention system and may include any monitoring and/or security arrangement (*e.g*., firewall, an intrusion detection system, and the like). Instead, the discussions are meant as examples and the invention is not limited by the examples presented.

Further, in this document, various implementations may be discussed using a network tap, as an example.

As can be appreciated from the foregoing, a sequential heartbeat arrangement and methods thereof are provided for determining the status of an inline monitoring system. By executing a sequential heartbeat diagnostic test, real-world condition simulations may be performed to better analyze the true state of the monitoring system. Thus, an unsecured condition may be quickly identified and preventive/maintenance measures may be implemented to minimize a firm's network exposure to external attack.

While this invention has been described in terms of several preferred embodiments, there are alteration, permutations, and equivalents, which fall within the scope of this invention. Although various examples are provided herein, it is intended that these examples be illustrative and not limiting with respect to the invention.

Also, the title and summary are provided herein for convenience and should not be used to construe the scope of the claims herein. It should also be noted that there are many alternative ways of implementing the arrangement of the present invention.

## Claims

1. An arrangement for a network tap (206) for monitoring state of a monitoring system, comprising:
a set of network ports (302, 306), said set of network ports including a set of input network ports for receiving data traffic and a set of output network ports for outputting said data traffic from said network tap;
a monitoring port, said monitoring port being configured to receive said data traffic from said set of network ports and to forward said data traffic onward to said monitoring system;
a logic component (210) configured for executing a sequential heartbeat diagnostic test, wherein said sequential heartbeat diagnostic test is configured for providing first, second, and third sets of sequential heartbeat packets (310, 312, 314) for testing and determining said state of said monitoring system, wherein the first set (310) of sequential heartbeat packets simulates a TCP connection, the second set (312) of sequential heartbeat packets simulates a first security policy, and the third set (314) of sequential heartbeat packets simulates a second security policy; and
a logic component (210) for activating one or more events when a failure condition exists for said state of said monitoring system.

2. The arrangement of claim 1, wherein said logic component is a field programmable gate array (FPGA).

3. The arrangement of claim 1, wherein said FPGA is user-configurable.

4. The arrangement of claim 2, wherein said FPGA includes a sequential heartbeat packet generator (212) configured for generating and inserting said first, second, and third sets of sequential heartbeat packets into said data traffic flowing into said monitoring system.

5. The arrangement of claim 3, wherein said FPGA includes a sequential heartbeat detector (214) configured for identifying and removing said first, second, and third sets of sequential heartbeat packets from said data traffic when said first, second, and third sets of sequential heartbeat packets returns from said monitoring system.

6. The arrangement of claim 4, wherein said programmable gate array includes a set of counters (216), said set of counters including a counter associated with each of said first, second, and third sets of sequential heartbeat packets, wherein the logic component is configured to compare said set of counters against a set of failure conditions to determine said state of said monitoring system.

7. The arrangement of claim 1, wherein said sequential heartbeat diagnostic test is user-configurable.

8. The arrangement of claim 7, wherein said sequential heartbeat diagnostic test is configurable utilizing at least one of a command line interface, a web-based device, and a system interface.

9. The arrangement of claim 1, wherein said monitoring system is an intrusion prevention system (208).

10. The arrangement of any preceding claim, wherein said logic component is configured to handle said failure condition by moving said network tap (206) from a normal mode in which said network traffic flowing through said network tap is protected by said monitoring system to a bypass mode in which said network traffic flowing through said network tap is not protected by said monitoring system.

11. The arrangement of any preceding claim, wherein the logic component is configured to execute a first sequential heartbeat diagnostic test and a second sequential heartbeat diagnostic test simultaneously.

12. The arrangement of any preceding claim, wherein said failure condition is user-configurable.

## Patentansprüche

1. Eine Anordnung für eine Netzwerkanzapfung (206) zum Überwachen eines Zustands eines Überwachungssystems, die Folgendes beinhaltet:
einen Satz Netzwerkanschlüsse (302, 306), wobei der Satz Netzwerkanschlüsse einen Satz Eingabe-Netzwerkanschlüsse zum Empfangen von Datenverkehr und einen Satz Ausgabe-Netzwerkanschlüsse zum Ausgeben des Datenverkehrs aus der Netzwerkanzapfung umfasst;
einen Überwachungsanschluss, wobei der Überwachungsanschluss konfiguriert ist, den Datenverkehr von dem Satz Netzwerkanschlüsse zu empfangen und den Datenverkehr an das Überwachungssystem weiterzuleiten;
eine Logikkomponente (210), die zum Ausführen eines sequenziellen Heartbeat-Diagnosetests konfiguriert ist, wobei der sequenzielle Heartbeat-Diagnosetest zum Bereitstellen von ersten, zweiten und dritten Sätzen sequenzieller Heartbeat-Pakete (310, 312, 314) zum Testen und Bestimmen des Zustands des Überwachungssystems konfiguriert ist, wobei der erste Satz (310) sequenzieller Heartbeat-Pakete eine TCP-Verbindung simuliert, der zweite Satz (312) sequenzieller Heartbeat-Pakete eine erste Sicherheitsrichtlinie simuliert und der dritte Satz (314) sequenzieller Heartbeat-Pakete eine zweite Sicherheitsrichtlinie simuliert; und
eine Logikkomponente (210) zum Aktivieren von einem oder mehreren Ereignissen, wenn eine Fehlerbedingung für den Zustand des Überwachungssystems besteht.

2. Anordnung gemäß Anspruch 1, wobei die Logikkomponente ein feldprogrammierbares Gate-Array (FPGA, field programmable gate array) ist.

3. Anordnung gemäß Anspruch 1, wobei das FPGA benutzerkonfigurierbar ist.

4. Anordnung gemäß Anspruch 2, wobei das FPGA einen sequenziellen Heartbeat-Paket-Generator (212) umfasst, der zum Erzeugen und Einsetzen der ersten, zweiten und dritten Sätze sequenzieller Heartbeat-Pakete in den in das Überwachungssystem fließenden Datenverkehr konfiguriert ist.

5. Anordnung gemäß Anspruch 3, wobei das FPGA einen sequenziellen Heartbeat-Detektor (214) umfasst, der zum Identifizieren und Entfernen der ersten, zweiten und dritten Sätze sequenzieller Heartbeat-Pakete aus dem Datenverkehr konfiguriert ist, wenn die ersten, zweiten und dritten Sätze sequenzieller Heartbeat-Pakete aus dem Überwachungssystem zurückkehren.

6. Anordnung gemäß Anspruch 4, wobei das programmierbare Gate-Array einen Satz Zähler (216) umfasst, wobei der Satz Zähler einen Zähler umfasst, der mit jedem von den ersten, zweiten und dritten Sätzen sequenzieller Heartbeat-Pakete verknüpft ist, wobei die Logikkomponente konfiguriert ist, den Satz Zähler mit einem Satz Fehlerbedingungen zu vergleichen, um den Zustand des Überwachungssystems zu bestimmen.

7. Anordnung gemäß Anspruch 1, wobei der sequenzielle Heartbeat-Diagnosetest benutzerkonfigurierbar ist.

8. Anordnung gemäß Anspruch 7, wobei der sequenzielle Heartbeat-Diagnosetest unter Benutzung zumindest eines von einer Befehlsleitungsschnittstelle, einer webbasierten Einrichtung und einer Systemschnittstelle konfigurierbar ist.

9. Anordnung gemäß Anspruch 1, wobei das Überwachungssystem ein Intrusion-Prevention-System (208) ist.

10. Anordnung gemäß einem der vorhergehenden Ansprüche, wobei die Logikkomponente konfiguriert ist, die Fehlerbedingung zu handhaben, indem die Netzwerkanzapfung (206) aus einem normalen Modus, in dem der durch diese Netzwerkanzapfung fließende Netzwerkverkehr durch das Überwachungssystem geschützt ist, in einen Umgehungsmodus, in dem der durch die Netzwerkanzapfung fließende Netzwerkverkehr nicht durch das Überwachungssystem geschützt ist, versetzt wird.

11. Anordnung gemäß einem der vorhergehenden Ansprüche, wobei die Logikkomponente konfiguriert ist, einen ersten sequenziellen Heartbeat-Diagnosetest und einen zweiten sequenziellen Heartbeat-Diagnosetest gleichzeitig auszuführen.

12. Anordnung gemäß einem der vorhergehenden Ansprüche, wobei die Fehlerbedingung benutzerkonfigurierbar ist.

## Revendications

1. Un agencement pour un dispositif de dérivation de réseau (network tap) (206) destiné à surveiller l'état d'un système de surveillance, comprenant :
un jeu de ports réseau (302, 306), ledit jeu de ports réseau incluant un jeu de ports réseau d'entrée destiné à recevoir un trafic de données et un jeu de ports réseau de sortie destiné à faire sortir ledit trafic de données dudit dispositif de dérivation de réseau ;
un port de surveillance, ledit port de surveillance étant configuré pour recevoir ledit trafic de données en provenance dudit jeu de ports réseau et pour réexpédier ledit trafic de données jusqu'audit système de surveillance ;
un composant logique (210) configuré pour exécuter un test de diagnostic de battement de coeur séquentiel, où ledit test de diagnostic de battement de coeur séquentiel est configuré pour fournir un premier, un deuxième et un troisième jeu de paquets de battements de coeur séquentiels (310, 312, 314) destinés à tester et à déterminer ledit état dudit système de surveillance, où le premier jeu (310) de paquets de battements de coeur séquentiels simule une connexion TCP, le deuxième jeu (312) de paquets de battements de coeur séquentiels simule une première politique de sécurité, et le troisième jeu (314) de paquets de battements de coeur séquentiels simule une deuxième politique de sécurité ; et
un composant logique (210) destiné à activer un ou plusieurs événements lorsqu'existe une condition de défaillance pour ledit état dudit système de surveillance.

2. L'agencement de la revendication 1, où ledit composant logique est un réseau de portes programmable in situ (FPGA).

3. L'agencement de la revendication 1, où ledit FPGA est configurable par l'utilisateur.

4. L'agencement de la revendication 2, où ledit FPGA inclut un générateur de paquets de battements de coeur séquentiels (212) configuré pour générer et insérer lesdits premier, deuxième et troisième jeux de paquets de battements de coeur séquentiels dans ledit trafic de données pénétrant dans ledit système de surveillance.

5. L'agencement de la revendication 3, où ledit FPGA inclut un détecteur de battement de coeur séquentiel (214) configuré pour identifier et ôter lesdits premier, deuxième et troisième jeux de paquets de battements de coeur séquentiels dudit trafic de données lorsque lesdits premier, deuxième et troisième jeux de paquets de battements de coeur séquentiels reviennent dudit système de surveillance.

6. L'agencement de la revendication 4, où ledit réseau de portes programmable inclut un jeu de compteurs (216), ledit jeu de compteurs incluant un compteur associé à chacun desdits premier, deuxième et troisième jeux de paquets de battements de coeur séquentiels, où le composant logique est configuré pour comparer ledit jeu de compteurs à un jeu de conditions de défaillance afin de déterminer ledit état dudit système de surveillance.

7. L'agencement de la revendication 1, où ledit test de diagnostic de battement de coeur séquentiel est configurable par l'utilisateur.

8. L'agencement de la revendication 7, où ledit test de diagnostic de battement de coeur séquentiel est configurable en utilisant au moins un élément parmi une interface de ligne de commande, un dispositif offert sur le Web, et une interface de système.

9. L'agencement de la revendication 1, où ledit système de surveillance est un système de prévention des intrusions (208).

10. L'agencement de n'importe quelle revendication précédente, où ledit composant logique est configuré pour s'occuper de ladite condition de défaillance en faisant passer ledit dispositif de surveillance de réseau (206) d'un mode normal dans lequel ledit trafic réseau qui s'écoule par ledit dispositif de dérivation de réseau est protégé par ledit système de surveillance à un mode en dérivation dans lequel ledit trafic réseau qui s'écoule par ledit dispositif de dérivation de réseau n'est pas protégé par ledit système de surveillance.

11. L'agencement de n'importe quelle revendication précédente, où le composant logique est configuré pour exécuter simultanément un premier test de diagnostic de battement de coeur séquentiel et un deuxième test de diagnostic de battement de coeur séquentiel.

12. L'agencement de n'importe quelle revendication précédente, où ladite condition de défaillance est configurable par l'utilisateur.
